# EUROPEAN PATENT SPECIFICATION

(11) **EP 1 973 639 B1**
(45) Date of publication and mention of the grant of the patent: **28.04.2010**
(21) Application number: 06820589.7
(22) Date of filing: 20.12.2006
(51) Int. Cl.: B01J 8/02, B01J 4/00, B01J 7/02, B01J 8/00, B01J 8/24, C10G 9/00, C10G 9/18, C10G 9/14

(54) **QUENCH TUBE, APPARATUS AND PROCESS FOR CATALYTIC GAS PHASE REACTIONS**
QUENCHROHR, VORRICHTUNG UND VERFAHREN FÜR KATALYTISCHE GASPHASENREAKTIONEN
TUBE DE DESACTIVATION, APPAREIL ET PROCESSUS POUR DES REACTIONS CATALYTIQUES EN PHASE GAZEUSE

(30) Priority: 20.01.2006 EP 06250306
(43) Date of publication of application: 01.10.2008
(73) Proprietor: INEOS EUROPE LIMITED, Lyndhurst Hampshire SO43 7FG (GB)
(72) Inventor: COLMAN, Derek, Alan, Hampshire GU51 4PR (GB)
(74) Representative: King, Alex
(86) International application number: PCT/GB2006/004800
(87) International publication number: WO 2007/083076

(56) References cited:
- US-A- 3 593 968
- US-A- 3 758 081
- US-A- 3 895 919
- US-A- 3 959 420
- US-A- 4 087 497
- US-A- 4 552 727
- US-A1- 2002 187 086
- US-A1- 2003 031 612

## Description

The present invention relates to a quench tube, an apparatus comprising said quench tubes, and in particular, an apparatus suitable for the production of olefins by autothermal cracking.

Autothermal cracking is a route to olefins in which the hydrocarbon feed is mixed with oxygen and passed over an autothermal cracking catalyst. The autothermal cracking catalyst is capable of supporting combustion beyond the fuel rich limit of flammability. Combustion is initiated on the catalyst surface and the heat required to raise the reactants to the process temperature and to carry out the endothermic cracking process is generated in situ. It is generally desired to utilise a mixed reactant stream which has been pre-heated, since less feed then need be combusted to generate the heat required for the endothermic cracking. Typically, the catalyst comprises a Group VIII metal, preferably at least one platinum group metal, for example, platinum. The autothermal cracking process is described in EP 332289B; EP-529793B; EP-A-0709446 and WO 00/14035.

The product stream typically exits the reaction zone as a gaseous product stream at a temperature greater than 800°C e.g. greater than 900°C and, especially when also at pressure, it is desired that the product stream is rapidly cooled. This ensures a high olefinic yield because the product cooling step slows down the rate of reaction in the gaseous product stream thus minimising further reactions taking place to form undesired products.

Generally, it is desired that the product stream is quenched on exiting the catalyst such that the temperature of the product stream is reduced to 800°C or less within 40mS, and advantageously within 20mS from exiting the catalyst, although longer quench times may be acceptable at lower pressures.

The rapid cooling may be achieved by injecting a condensate into the gaseous product stream, preferably at multiple points, such that the vaporisation of the condensate cools the gaseous product stream.

US 3,895,919 relates to a device for the production of a homogeneous mixture of a quench gas with a reaction stream using a mixing assembly provided with upper and lower plates carrying mixing tubes equipped with restricted orifices.

US 2003/031612 relates to a contact, mixing and quenching box for fluids.

US 3,593,968 relates to a method and apparatus for cooling a hot pyrolysis exit gas stream by flowing the gas stream downwardly through a quench zone the walls of which are covered by a flm of quench oil while spraying quench oil into the gas stream.

US 3,758,081 relates to a quench chamber for hot gases comprising an internal jacket formed of porous graphite and defining an internal volume, an external jacket encasing the internal jacket and defining at least one compartment therebetween and passage means communicating with the compartment and the internal volume for passage of a cooling fluid to the internal volume.

It has now been found that when scaling up an autothermal cracking process to a commercial scale that advantageously efficient and rapid cooling of the product stream may be achieved by the use of quench tubes with defined dimensions.

Thus, in a first aspect, the present invention provides a quench tube, having a length, L, a diameter, D, and at least one quenchant inlet per tube which inlet passes quenchant into the tube from the side of said tube such that the quenchant is introduced at an angle of at least 30° compared to the longitudinal axis of the quench tube, and wherein,
D is between 0.04 and 0.10 m and L/D is at least 5.
D is preferably between 0.04 and 0.08m.
L/D is preferably at least 10. Preferably, L/D is less than 15.

By "passes quenchant into the tube from the side of said tube" is meant that the quenchant is introduced at an angle, especially at least 45°, and preferably approximately 90°, compared to the longitudinal axis of the quench tube. This provides better mixing, and hence more rapid cooling, than a quenchant inlet injecting quenchant along the axis of the quench tube i.e. in parallel to the general direction of flow through the tube. (For avoidance of doubt, it will be apparent that when not at 90° compared to the longitudinal axis of the quench tube, a particular angle of introduction will cover positions both less than 90° and more than 90° compared to the direction of the longitudinal axis runing from the inlet of the quench tube to the outlet (and in use compared to the overall direction of the flow of material to be quenched through the tube), and all such positions are intended to be encompassed in the present invention.)

Preferably, two to four quenchant inlets are provided per quench tube, suitably spaced approximately equidistantly around the quench tube.

Each quenchant inlet may comprise a single nozzle or a number of nozzles, for example 2 to 7 nozzles. Typically, they will be close packed to minimise the size of the inlet nozzle arrangement.

Preferably, the quenchant is introduced into the side of the tube by the nozzles/inlets at a number of different angles, each individually being at least 30°, especially at least 45° compared to the longitudinal axis of the quench tube.

In use, each quench tube may be defined by an inlet end, at the end to which the stream to be quenched is introduced and an outlet end at the other end. The quenchant inlet (at least the first nozzle where more than one nozzle is provided per inlet) is generally provided in the portion of each quench tube closest to the inlet end, so that the quenchant can be contacted with the stream to be cooled as quickly as possible after it enters the quench tube.

The diameter of the tubes, D, is critical to the present invention.

At the tube diameters of the present invention, the L/D of at least 5 has been found to ensure good mixing of the quenchant and gaseous product stream within the length of said tube, which ensures rapid cooling. In contrast, at larger diameters even significantly longer quench tubes may not provide the required quenching, and certainly not in as short a time-scale.

Although providing a narrower tube than those claimed can further increase quenchant/gas contacting and hence quenching efficiency, further reducing the quench time, such tubes have been found to suffer from a number of disadvantages, including:
i) if D is too small, a significant quantity of the quenchant entering the side of the quench tube can reach and cool the far wall of tube from the side where injected, which reduces mixing/cooling efficiency and causes potential stresses on the tube,
ii) if D is too small, on start-up if water reaches the far wall it can be deflected upwards and affect the region below the catalyst e.g. low temperature trips, and
iii) as D decreases, the SA to volume of the quench tubes increases leading to increased surface area for coke formation.

The quench tubes of the present invention are preferably free of obstructions or restrictions which could impede the flow of gas or gas/quenchant mixture through the quench tube. This minimises the residence time in the quench tube of the gas to be quenched (as well as providing for simpler engineering at the relatively small scale of the quench tubes).

The quench tubes of the first aspect of the present invention have been found to provide the optimum quenching when used as a plurality of tubes to quench a hot, gaseous, autothermal cracking product stream at commercial scale. In particular, quench tubes according to the process of the present invention have been found to provide good mixing and efficient quenching at a residence time in the tubes themselves of less than 20ms, especially less than 10ms.

Thus, in a second aspect, the present invention provides apparatus for reacting a first gaseous reactant stream with a second gaseous reactant stream to form a gaseous product stream,
wherein the apparatus comprises at least one first supply means for the first gaseous reactant stream, at least one second supply means for the second gaseous reactant stream, a catalyst zone, and a product quench zone,
wherein the catalyst zone has a cross-sectional area, CA, of at least 0.01m²,
wherein the product quench zone is positioned downstream of the catalyst zone and comprises a plurality, N, of quench tubes, each tube having a length, L, a diameter, D, and a cross-sectional area, QA, each quench tube having at least one quenchant inlet per tube which inlet passes quenchant into the tube from the side of said tube such that the quenchant is introduced at an angle of at least 30° compared to the longitudinal axis of the quench tube, and wherein,
D is between 0.04 and 0.10 m,
L/D is at least 5, and
(N x QA) / CA is between 0.07 and 0.31.

The apparatus is suitable for autothermal cracking processes or for other processes in which it is desired to rapidly cool the gaseous product stream formed by reacting a first gaseous reactant stream with a second gaseous reactant stream over a catalyst.

The cross-section of the catalyst zone (CA) is usually at least 0.05 m², preferably at least 0.1 m².

The cross-section of the catalyst zone is usually less than 1.2 m², preferably less than 0.5 m².

Most preferably, the cross-section of the catalyst zone is in the range 0.2 to 0.3 m².

In use the catalyst zone comprises a catalyst. The depth of the catalyst is preferably 0.02 to 0.1 m.

The shape of the cross-section of the catalyst zone will usually be the same as the shape of the internal cross-section of the reactor.

The internal cross-section of the reactor may be circular.

Alternatively, the internal cross-section of the reactor may be non-circular, such as polygonal, preferably regular polygonal, having at least 4 sides, preferably at least 5 sides and preferably less than 8 sides, for example hexagonal.

The apparatus comprises a plurality of tubes, N. Thus, N is at least 2. The optimum number of tubes depends on the total cross-section of the catalyst zone, and, in general, increases with an increase in the cross-sectional area of the catalyst zone. Thus, the ratio (N x QA) / CA gives the ratio of the total cross-sectional area of the N quench tubes to the cross-sectional area of the catalyst zone. (The cross-sectional area of each tube (QA) is proportional to it diameter, D, according to the equation QA = (0.5 x D)² x π.)

Preferably, (N x QA) / CA is less than 0.25, for example in the range 0.08 to 0.25. More preferably, (N x QA) / CA is at least 0.1, and, most preferably, in the range 0.1 to 0.2.

Usually N is at least 3. Preferably, N is less than 20, more preferably less than 10.

Preferably D is at least 0.06m and/or less than or equal to 0.085m.

The L/D in the second aspect is at least 5. Preferably, the L/D is at least 10. In particular, as noted previously, an L/D of at least 5 has been found to ensure good mixing of the quenchant and gaseous product stream within the length of said tube, which ensures rapid cooling. Preferably L/D is less than 15, for example from 10 to 15.

The first and second gaseous reactant streams are preferably mixed and pre-heated immediately before contact with the catalyst in the catalyst zone. Thus, the apparatus preferably comprises a mixing and pre-heating section upstream of the catalyst zone. Any suitable mixing and pre-heating means may be used. Most preferably, the apparatus comprises a mixing and pre-heating section which utilises first and second supply means for the respective reactants each comprising a plurality of outlets, as described in WO 2004/074222.

Thus, the apparatus preferably comprises at least one first supply means for the first gaseous reactant stream, at least one second supply means for the second gaseous reactant stream, a resistance zone and a catalyst zone,
wherein the first supply means comprises a plurality of first outlets for delivery of the first gaseous reactant stream, and the second supply means comprises a plurality of second outlets for delivery of the second gaseous reactant stream,
the resistance zone is porous, is positioned downstream of the first and second supply means with respect to the flow of the first and second gaseous reactant streams and is in fluid communication with the first and second supply means,
the catalyst zone is positioned downstream of the resistance zone with respect to the flow of the first and second gaseous reactant streams and is in fluid communication with the resistance zone, and
wherein the first supply means and the second supply means are arranged such that the first and second gaseous reactant streams are contacted in an essentially parallel manner and mixed prior to contacting the resistance zone.

The plurality of outlets of the mixing device are preferably provided in a regular pattern, such as described in WO 2004/074222. This leads to the most efficient supply. Preferred configurations to achieve this are hexagonal (where one outlet has 6 nearest neighbours equally spaced from it in a regular hexagon configuration).

The resistance zone is porous and ensures dispersion of the reactants as they pass through the zone, such that they leave the resistance zone substantially uniformly distributed over the cross-sectional area of the resistance zone, and hence substantially uniformly distributed over the cross-sectional area of the subsequent catalyst zone.

The resistance zone may be formed of a porous metal structure, but preferably the porous material is a non metal e.g. a ceramic material. Suitable ceramic materials include lithium aluminium silicate (LAS), alumina (Al₂O₃), stabilised zirconias, alumina titanate, niascon, cordierite, mullite, silica and calcium zirconyl phosphate. Preferred porous materials are alpha alumina or cordierite. The porous material may be in the form of spheres or other granular shapes. Alternatively, the porous material may be in the form of a foam.

Preferably, the apparatus is designed to operate at elevated pressure, for example at a pressure of greater than 0.05 MPa gauge (0.5barg), preferably at a pressure of least 1 MPa gauge (10 barg), and more preferably at a pressure of at least 1.5 MPa gauge (15 barg). The pressure is preferably less than 5 MPa gauge (50 barg), and more preferably less than 3.5 MPa gauge (35 barg), for example in the range 2 to 3 MPa gauge (20 to 30 barg).

The catalyst zone usually comprises a catalyst bed held in place in the reaction zone in a suitable holder, such as a catalyst basket. Preferably, to prevent gas by-passing the catalyst between the catalyst and the holder, any space between the catalyst and the holder is filled with a suitable sealing material. Suitable sealing materials include man made mineral wools e.g. ceramic wool, which can be wrapped around the edges of the catalyst in the holder. In addition the catalyst may be coated around the edge with a material similar to the main catalyst support material, such as alumina, to aid this sealing.

The apparatus is advantageously employed to partially oxidize a gaseous feedstock.

The present invention also provides a process in which a first gaseous reactant stream and a second gaseous reactant stream are contacted with a catalyst to produce a gaseous product stream, which product stream is quenched on exiting the catalyst, said process being performed in an apparatus and/or using the quench tubes as described herein.

Quenching is achieved by contacting the product stream with a quenchant in the quench tubes. The quenchant may be a gas or a liquid. The quenchant may be an inert quenchant or may be a reactive quenchant, for example, a hydrocarbon, especially an alkane or mixture of alkanes which could crack to produce olefin. When the quenchant is gas it is preferably an inert gas. Preferably the quenchant is a liquid e.g. water.

The quenchant, such as water, is usually injected at a pressure higher than the pressure of the gaseous product stream, such as 10 MPa gauge (100 barg), and is usually injected at a temperature of between 100-400°C and preferably between 200-350°C e.g. 300°C. Injecting the quenchant at high pressure and high temperature ensures that a large proportion of the quenchant instantaneously vaporizes at the reactor pressure and therefore provides a very rapid temperature drop in the gaseous product stream.

The product stream is quenched on exiting the catalyst to a temperature of 800°C or less, preferably within 40ms and advantageously within 20mS from exiting the catalyst. The product stream may be quenched on exiting the catalyst such that the temperature of the product stream is reduced to between 700°C and 800°C, or may be quenched to lower temperature, for example 600°C or less (again preferably within 40mS, and advantageously 20mS from exiting the catalyst) to minimise further reactions.

Preferably the first gaseous reactant stream comprises an oxygen containing gas and the second gaseous reactant stream comprises a gaseous paraffinic hydrocarbon.

Most preferably, the oxygen containing gas and the gaseous paraffinic hydrocarbon are contacted with a catalyst capable of supporting combustion beyond the normal fuel rich limit wherein autothermal cracking occurs to produce one or more olefins.

Thus, in a particular embodiment of the process of the present invention, a gaseous paraffinic hydrocarbon and a molecular oxygen containing gas are contacted with a catalyst capable of supporting combustion beyond the normal fuel rich limit of flammability to produce a gaseous product stream comprising olefins, which product stream is quenched on exiting the catalyst, said process being performed in an apparatus and/or using the quench tubes as described herein.

On contacting of the paraffinic hydrocarbon and molecular oxygen containing gas with a catalyst capable of supporting combustion beyond the normal fuel rich limit of flammability, combustion of the paraffinic hydrocarbon is initiated on the catalyst and the heat required to raise the reactants to the process temperature and to carry out the endothermic cracking process to produce olefins is generated in situ.

The catalyst for autothermal cracking may be unsupported, such as in the form of a metal gauze, but is preferably supported. Any suitable support material may be used, such as ceramic or metal supports, but ceramic supports are generally preferred. Where ceramic supports are used, the composition of the ceramic support may be any oxide or combination of oxides that is stable at high temperatures of, for example, between 600°C and 1200°C. The support material preferably has a low thermal expansion co-efficient, and is resistant to phase separation at high temperatures.

Suitable ceramic supports include cordierite, mullite, lithium aluminium silicate (LAS), alumina (e.g. α-Al₂O₃), stabilised zirconias, alumina titanate, niascon, and calcium zirconyl phosphate. The ceramic supports may be wash-coated, for example, with γ-Al₂O₃.

The support is preferably in the form of a foam or a honeycomb monolith.

The hydrocarbon and molecular oxygen-containing gas are preferably mixed and pre-heated before contact with the catalyst, either by heating the hydrocarbon and oxygen prior to mixing or after mixing, or a combination of both.

Preferred hydrocarbons for autothermal cracking are paraffinic hydrocarbons having at least 2 carbon atoms. For example, the hydrocarbon may be a gaseous hydrocarbon, such as ethane, propane or butane or a liquid hydrocarbon, such as a naphtha or an FT liquid. Where a liquid hydrocarbon is to be reacted it should be vaporised to form a gaseous reactant stream for use in the present invention.

The oxygen containing gas may be provided as any suitable molecular oxygen containing gas, such as molecular oxygen itself or air.

Preferably, hydrogen is co-fed to the autothermal cracking reaction. Hydrogen co-feeds are advantageous because, in the presence of the autothermal cracking catalyst, the hydrogen combusts preferentially relative to hydrocarbon, thereby increasing the olefin selectivity of the overall process. The amount of hydrogen combusted may be used to control the amount of heat generated and hence the severity of cracking. Thus, the molar ratio of hydrogen to oxygen can vary over any operable range provided that the autothermal cracking product stream comprising olefins is produced. Suitably, the molar ratio of hydrogen to oxygen is in the range 0.2 to 4, preferably, in the range 0.2 to 3.

The hydrocarbon and oxygen-containing gas may be contacted with the catalyst in any suitable molar ratio, provided that the autothermal cracking product stream comprising olefins is produced. The preferred stoichiometric ratio of hydrocarbon to oxygen is 5 to 16, preferably, 5 to 13.5 times, preferably, 6 to 10 times the stoichiometric ratio of hydrocarbon to oxygen required for complete combustion of the hydrocarbon to carbon dioxide and water.

Preferably, the reactants are passed over the catalyst at a pressure dependent gas hourly space velocity of greater than 200,000 h⁻¹ MPa gauge⁻¹ (20,000 h⁻¹ barg⁻¹) and, most preferably, greater than 1,000,000 h⁻¹ MPa gauge ⁻¹ (100,000 h⁻¹ barg⁻¹). For example, at 2 MPa gauge (20 barg pressure), the gas hourly space velocity is most preferably, greater than 2,000,000 h ⁻¹. It will be understood, however, that the optimum gas hourly space velocity will depend upon the nature of the feed composition.

The autothermal cracking step may suitably be carried out at a catalyst exit temperature in the range 600°C to 1200°C. Suitably the catalyst exit temperature is at least 720°C such as at least 750°C. Preferably, the autothermal cracking step is carried out at a catalyst exit temperature in the range 850°C to 1050°C and, most preferably, in the range 850°C to 1000°C.

The autothermal cracking step is usually operated at a pressure of greater than 0.05 MPa gauge (0.5barg), preferably at a pressure of least 1 MPa gauge (10 barg), and more preferably at a pressure of at least 1.5 MPa gauge (15 barg). The pressure is preferably less than 5 MPa gauge (50 barg), and more preferably less than 3.5 MPa gauge (35 barg), for example in the range 2 to 3 MPa gauge (20 to 30 barg).

The catalyst for autothermal cracking is capable of supporting combustion beyond the fuel rich limit of flammability. The catalyst usually comprises a Group VIII metal as its catalytic component. Suitable Group VIII metals include platinum, palladium, ruthenium, rhodium, osmium and iridium. Rhodium, and more particularly, platinum and palladium are preferred. Typical Group VIII metal loadings range from 0.01 to 100 wt%, preferably, between 0.01 to 20 wt%, and more preferably, from 0.01 to 10 wt% based on the total dry weight of the catalyst.

Where a Group VIII catalyst is employed, it is preferably employed in combination with a catalyst promoter. The promoter may be a Group IIIA, IVA, and/or VA metal. Alternatively, the promoter may be a transition metal; the transition metal promoter being a different metal to that which may be employed as the Group VIII transition metal catalytic component. Preferred promoters are selected from the group consisting of Ga, In, Sn, Ge, Ag, Au or Cu. The atomic ratio of Group VIII metal to the catalyst promoter may be 1 : 0.1 - 50.0, preferably, 1: 0.1 - 12.0.

Preferred examples of promoted catalysts include Pt/Ga, Pt/In, Pt/Sn, Pt/Ge, Pt/Cu, Pd/Sn, Pd/Ge, Pd/Cu, Rh/Sn, Pt/Pd/Cu and Pt/Pd/Sn catalysts.

For the avoidance of doubt, the Group VIII metal and promoter in the catalyst may be present in any form, for example, as a metal, or in the form of a metal compound, such as an oxide.

The catalyst may be prepared by any method known in the art. For example, gel methods and wet-impregnation techniques may be employed. Typically, the support is impregnated with one or more solutions comprising the metals, dried and then calcined in air. The support may be impregnated in one or more steps. Preferably, multiple impregnation steps are employed. The support is preferably dried and calcined between each impregnation, and then subjected to a final calcination, preferably, in air. The calcined support may then be reduced, for example, by heat treatment in a hydrogen atmosphere.

Although the catalyst has been described above in terms of a single catalyst, the catalyst may alternatively be present as a sequential catalyst bed, as described, for example, in WO 02/04389.

The gaseous product stream, in addition to olefins, will generally comprise unreacted paraffinic hydrocarbons, hydrogen, carbon monoxide and methane, and may comprise water, and small amounts of acetylenes, aromatics and carbon dioxide, which need to be separated from the desired olefins. It should be noted that "gaseous" as used to refer to the product stream refers to the state of the stream as it exits the catalyst, and components of said stream, such as water, may be liquids at lower temperatures. The required separations on said stream, after quenching, may be performed by any suitable techniques, such as an amine wash to remove carbon dioxide and any water, a demethaniser, to separate hydrogen, carbon monoxide and methane, a deethaniser, to separate C3+ hydrocarbons from ethane and ethylene, and a C2 splitter to separate ethylene from ethane.

The present invention is particularly useful for apparatus and processes at a commercial scale. "Commercial scale" will depend on the process itself, but the reactor/catalyst bed will typically be sized to process at least 50 ktpa of hydrocarbon (per reactor where more than one reactor is present), preferably at least 100 ktpa of hydrocarbon (per reactor).

For example, for the production of olefins in an autothermal cracking process, a commercial scale is typically sized to produce at least 25 ktpa of olefins (per reactor), preferably at least 75 ktpa of olefins (per reactor).

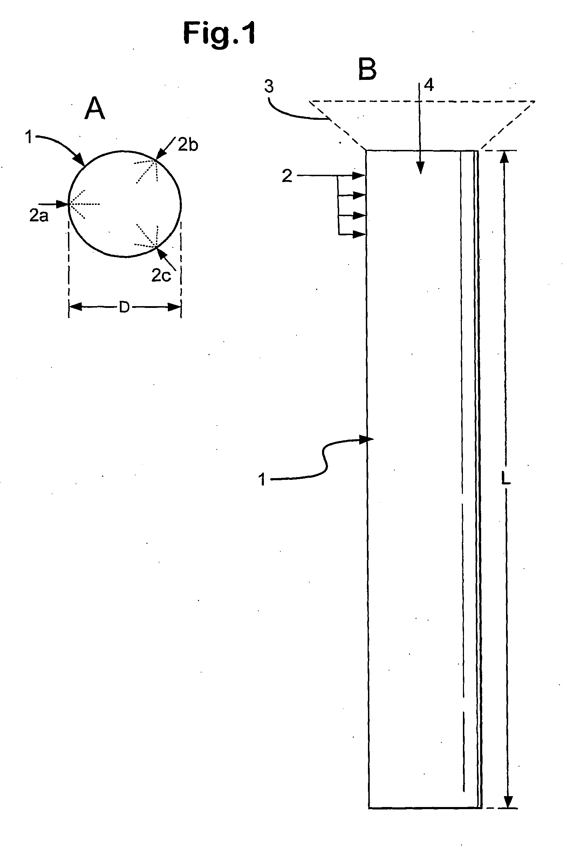

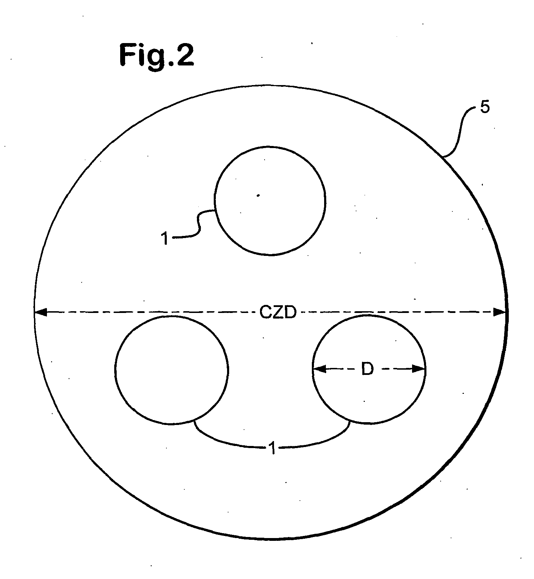

The invention will now be illustrated by way of Figures 1 and 2, wherein:
Figure 1 shows, in schematic form, a quench tube according to one embodiment of the present invention, and
Figure 2, shows in schematic form, a cross-section of the top of the product quench zone of an apparatus according to the present invention.

With regards to Figure 1, there is shown in (A) the cross-section of a quench tube (1), of diameter D, which is provided with 3 quenchant inlets, (2a-c), spaced equidistantly around the quench tube (1). The spray of quenchant from each quenchant inlet is shown schematically by the dashed lines. Also with regards to Figure 1, there is shown in (B) the side view of the quench tube (1), showing the length, L, which in this Figure is 6 times the diameter, D. Also shown in Figure 1 (B) is a profile of a single quenchant inlet (2) (which could represent any one of inlets 2a to 2c in Figure 1 (A)), showing that the inlet (2) comprises 4 nozzles (spaced in the direction of the longitudinal axis of the tube (1)). Typically, the quench tube will be connected to a suitable inlet (3)(shown by dashed shape), through which the flow of a product gas (4) could be passed to the quench tube from an upstream catalyst zone of higher cross-section.

With regards to Figure 2, there is shown a cross-section of the top of the product quench zone, showing 3 tubes (1), each with a diameter, D, spaced across the cross-section of the reactor (5), which corresponds to the cross-section of the catalyst zone. The cross-section (5) has a diameter, CZD. In this example, (N x QA)/CA is equal to 0.17 (D/CZD is 0.24 and QA/CA is 0.058).

### Example

The present invention has been modelled using computational fluid dynamics (CFD) for a catalyst zone with a diameter of 600 mm, giving a cross-sectional area, CA, of 0.28m².

A comparative example was modelled using a quench tube of 200mm diameter and 1500mm length (L/D is 7.5). The quench tube had 8 quenchant inlets with a single nozzle on each inlet, the inlets being spaced equidistantly around the top of the quench tube.

Water was injected at 310°C and 10 MPa gauge (100 barg) at a total rate of 4 kg/s through said inlets into a product stream at a temperature of 920°C and 3 MPa gauge (30 barg) which had a linear velocity on exiting the catalyst of 15 m/s (giving an average velocity in the tube of 135 m/s). At the base of the quench tube (which is equivalent to a mean residence time of the product gas in the quench tube of 11.1 ms), a significant variation in the temperature of the product gas across the cross-section of the tube was observed (nearly 200°C), showing poor mixing, and a significant portion of the product stream was still close to 900°C, with very limited quenching of the product stream at the centre of the quench tube.

An example according to the present invention was also modelled. In this example, seven quench tubes are provided, each having a diameter, D, of 100mm (0.1m), and a length of 500mm (L/D = 5). [(N x QA)/CA is equal to 0.19.] Each quench tube has 4 quenchant inlets and a single nozzle on each inlet, the inlets being spaced equidistantly around the top of the quench tube.

Again water was injected at 310°C and 10 MPa gauge (100 barg), with a total rate per quench tube of 0.57 kg/s (total water flow is therefore 4kg/s for 7 tubes, equivalent to the single tube of the comparative example) into a product stream at a temperature of 920°C and 3 MPa gauge (30 barg) which has a linear velocity on exiting the catalyst of 15 m/s (average linear velocity in each tube of 77 m/s). In this case, at the base of the tube a relatively even distribution of temperature is obtained, with an average of approximately 800°C, showing good mixing and efficient quenching. In fact, the temperature of the product gas at all points across the cross-section of the quench tube was reduced below 900°C before the gas had passed halfway down the tube.

This is in spite of the fact that the mean residence time of the product gas in the quench tube is also reduced by over 40% to 6.5 milliseconds.

## Claims

1. A quench tube, having a length, L, a diameter, D, and at least one quenchant inlet per tube which inlet passes quenchant into the tube from the side of said tube such that the quenchant is introduced at an angle of at least 30° compared to the longitudinal axis of the quench tube, and wherein,
D is between 0.04 and 0.10 m and L/D is at least 5.

2. A quench tube as claimed in claim 1, which has two to four quenchant inlets.

3. Apparatus for reacting a first gaseous reactant stream with a second gaseous reactant stream to form a gaseous product stream,
wherein the apparatus comprises at least one first supply means for the first gaseous reactant stream, at least one second supply means for the second gaseous reactant stream, a catalyst zone, and a product quench zone,
wherein the catalyst zone has a cross-sectional area, CA, of at least 0.01m²,
wherein the product quench zone is positioned downstream of the catalyst zone and comprises a plurality, N, of quench tubes, each tube having a length, L, a diameter, D, and a cross-sectional area, QA, each quench tube having at least one quenchant inlet per tube which inlet passes quenchant into the tube from the side of said tube such that the quenchant is introduced at an angle of at least 30° compared to the longitudinal axis of the quench tube, and wherein,
D is between 0.04 and 0.10 m,
L/D is at least 5, and
(N x QA) / CA is between 0.07 and 0.31.

4. Apparatus according to claim 3, wherein (N x QA) / CA is less than 0.25.

5. Apparatus according to claim 3 or claim 4, wherein N is at least 3 and less than 20.

6. A process in which a first gaseous reactant stream and a second gaseous reactant stream are contacted with a catalyst to produce a gaseous product stream, which product stream is quenched on exiting the catalyst, said process being performed using the quench tubes according to claim 1 or claim 2 or in an apparatus according to any one of claims 3 to 5.

7. A process according to claim 6 which process is a process for the production of an olefin by autothermal cracking, in which a gaseous paraffinic hydrocarbon and a molecular oxygen containing gas are contacted with a catalyst capable of supporting combustion beyond the normal fuel rich limit of flammability to produce a gaseous product stream comprising olefins.

## Patentansprüche

1. Abschreckrohr mit einer Länge L, einem Durchmesser D und wenigstens einem Abschreckmediumseinlass pro Rohr, wobei der Einlass Abschreckmedium von der Seite des Rohrs her in einer solchen Weise in das Rohr leitet, dass das Abschreckmedium in einem Winkel von wenigstens 30° gegenüber der Längsachse des Abschreckrohrs eingeleitet wird, und wobei
D zwischen 0,04 und 0,10 m liegt und L/D wenigstens 5 beträgt.

2. Abschreckrohr gemäß Anspruch 1, das zwei bis vier Abschreckmediumseinlässe aufweist.

3. Vorrichtung zum Umsetzen eines ersten gasförmigen Reaktantenstroms mit einem zweiten gasförmigen Reaktantenstrom unter Bildung eines gasförmigen Produktstroms,
wobei die Vorrichtung wenigstens eine erste Zuführungseinrichtung für den ersten gasförmigen Reaktantenstrom, wenigstens eine zweite Zuführungseinrichtung für den zweiten gasförmigen Reaktantenstrom, eine Katalysatorzone und eine Produktabschreckzone umfasst,
wobei die Katalysatorzone eine Querschnittsfläche CA von wenigstens 0,01 m² aufweist,
wobei sich die Produktabschreckzone stromabwärts der Katalysatorzone befindet und eine Vielzahl N von Abschreckrohren umfasst, wobei jedes Rohr eine Länge L, einen Durchmesser D und eine Querschnittsfläche QA aufweist, wobei jedes Abschreckrohr wenigstens einen Abschreckmediumseinlass pro Rohr aufweist,
wobei der Einlass Abschreckmedium von der Seite des Rohrs her in einer solchen Weise in das Rohr leitet, dass das Abschreckmedium in einem Winkel von wenigstens 30° gegenüber der Längsachse des Abschreckrohrs eingeleitet wird, und wobei
D zwischen 0,04 und 0,10 m liegt,
L/D wenigstens 5 beträgt und
(N x QA)/CA zwischen 0,07 und 0,31 liegt.

4. Vorrichtung gemäß Anspruch 3, wobei (N x QA)/CA kleiner als 0,25 ist.

5. Vorrichtung gemäß Anspruch 3 oder 4, wobei N wenigstens 3 beträgt und kleiner als 20 ist.

6. Verfahren, bei dem ein erster gasförmiger Reaktantenstrom und ein zweiter gasförmiger Reaktantenstrom unter Bildung eines gasförmigen Produktstroms mit einem Katalysator in Kontakt gebracht werden, wobei der Produktstrom beim Verlassen des Katalysators abgeschreckt wird, wobei das Verfahren unter Verwendung der Abschreckrohre gemäß Anspruch 1 oder 2 oder in einer Vorrichtung gemäß einem der Ansprüche 3 bis 5 durchgeführt wird.

7. Verfahren gemäß Anspruch 6, wobei das Verfahren ein Verfahren zur Herstellung eines Olefins durch autothermes Cracken ist, wobei ein gasförmiger paraffinischer Kohlenwasserstoff und ein molekularen Sauerstoff enthaltendes Gas mit einem Katalysator in Kontakt gebracht werden, der die Verbrennung jenseits der normalen brennstoffreichen Entflammbarkeitsgrenze unterstützen kann, wobei ein gasförmiger Produktstrom entsteht, der Olefine umfasst.

## Revendications

1. Tube de désactivation, ayant une longueur L, un diamètre D et au moins une entrée de désactivateur par tube, laquelle entrée fait passer le désactivateur dans le tube du côté dudit tube de sorte que le désactivateur est introduit à un angle d'au moins 30° par rapport à l'axe longitudinal du tube de désactivation, et dans lequel,
D est compris entre 0,04 et 0,10 m et L/D vaut au moins 5.

2. Tube de désactivation selon la revendication 1, qui comporte deux à quatre entrées de désactivateur.

3. Appareil pour faire réagir un premier courant de réactif gazeux avec un second courant de réactif gazeux pour former un courant de produit gazeux,
dans lequel l'appareil comprend au moins un premier moyen d'alimentation pour le premier courant de réactif gazeux, au moins un second moyen d'alimentation pour le second courant de réactif gazeux, une zone de catalyseur, et une zone de désactivation de produit,
dans lequel la zone de catalyseur a une aire en coupe CA, d'au moins 0,01 m²,
dans lequel la zone de désactivation de produit est positionnée en aval de la zone de catalyseur et comprend une pluralité, N, de tubes de désactivation, chaque tube ayant une longueur L, un diamètre D et une aire en coupe QA, chaque tube de désactivation ayant au moins une entrée de désactivateur par tube, laquelle entrée fait passer le désactivateur dans le tube du côté dudit tube de sorte que le désactivateur est introduit à un angle d'au moins 30° par rapport à l'axe longitudinal du tube de désactivation, et dans lequel,
D est compris entre 0,04 et 0,10 m,
L/D vaut au moins 5, et
(N x QA)/CA est compris entre 0,07 et 0,31.

4. Appareil selon la revendication 3, dans lequel (N x QA)/CA est inférieur à 0,25.

5. Appareil selon la revendication 3 ou la revendication 4, dans lequel N vaut au moins 3 et est inférieur à 20.

6. Procédé dans lequel un premier courant de réactif gazeux et un second courant de réactif gazeux sont mis en contact avec un catalyseur pour produire un courant de produit gazeux, lequel courant de produit est désactivé en quittant le catalyseur, ledit procédé étant effectué en utilisant les tubes de désactivation selon la revendication 1 ou la revendication 2 ou dans un appareil selon l'une quelconque des revendications 3 à 5.

7. Procédé selon la revendication 6, lequel procédé est un procédé de production d'une oléfine par craquage autothermique, dans lequel un hydrocarbure paraffinique gazeux et un gaz contenant de l'oxygène moléculaire sont mis en contact avec un catalyseur capable de supporter une combustion au-delà de la limite inférieure normale d'inflammabilité pour produire un courant de produit gazeux comprenant des oléfines.
